# EUROPEAN PATENT APPLICATION

(11) **EP 4 219 900 A1**
(43) Date of publication of application: **02.08.2023**
(21) Application number: 22211535.4
(22) Date of filing: 05.12.2022
(51) Int. Cl.: F01D 5/14, F01D 5/16, F01D 11/12, F01D 25/06, F01D 5/20, F01D 5/28

(54) **NON-UNIFORM TURBOMACHINERY BLADE TIPS FOR FREQUENCY TUNING**

(30) Priority: 26.01.2022 US 202217649030
(71) Applicant: General Electric Company, Schenectady, NY 12345 (US)
(72) Inventor: ANDREOLI, Valeria, Niskayuna, 12309 (US); VANDEPUTTE, Thomas, Niskayuna, 12309 (US); SARAWATE, Neelesh, Pleasanton, 94588 (US)
(74) Representative: Openshaw & Co.

(57) **Abstract**

A rotor blade system includes a rotor, a casing radially spaced apart from the rotor, and a plurality of blades coupled to the rotor and positioned between the rotor and the casing. The one or more of the plurality of blades have a radial length different from a remaining one or more of the plurality of blades so as to vary a tip gap between a tip of the one or more of the plurality of blades and the casing to break up a frequency content of a leakage vortex at the tip to modify natural frequencies of the plurality of blades and mode shapes to reduce or substantially eliminate flutter.

## Description

### TECHNICAL FIELD

The present disclosure relates generally to rotor blade systems and, in particular, to non-uniform turbomachinery blade tips for tuning frequency of rotor blades and the rotor blade systems.

### BACKGROUND

A gas turbine engine generally includes a fan and a core arranged in flow communication with one another with the core disposed downstream of the fan in the direction of flow through the gas turbine engine. The core of the gas turbine engine generally includes, in serial flow order, a compressor section, a combustion section, a turbine section, and an exhaust section. With multi-shaft gas turbine engines, the compressor section can include a high pressure compressor (HPC) disposed downstream of a low pressure compressor (LPC), and the turbine section can similarly include a low pressure turbine (LPT) disposed downstream of a high pressure turbine (HPT). With such a configuration, the HPC is coupled with the HPT via a high pressure shaft (HPS), and the LPC is coupled with the LPT via a low pressure shaft (LPS).

In operation, at least a portion of air over the fan is provided to an inlet of the core. Such a portion of the air is progressively compressed by the LPC and then by the HPC until the compressed air reaches the combustion section. Fuel is mixed with the compressed air and burned within the combustion section to produce combustion gases. The combustion gases are routed from the combustion section through the HPT and then through the LPT. The flow of combustion gases through the turbine section drives the HPT and the LPT, each of which in turn drives a respective one of the HPC and the LPC via the HPS and the LPS. The combustion gases are then routed through the exhaust section, e.g., to atmosphere.

The LPT drives the LPS, which drives the LPC. In addition to driving the LPC, the LPS can drive the fan through a power gearbox, which allows the fan to be rotated at fewer revolutions per unit of time than the rotational speed of the LPS for greater efficiency.

Various sections of the gas turbine engine including the HPC, LPC, HPT and LPT include rotors and a plurality of blades coupled to the rotors. The current trend in gas turbine engine design is to achieve a greater AN2. AN2 is parameter that is equal to the product of the annulus mid-area along the rotor blade (A) and the blade rotational speed squared (N²). A higher AN2 value indicates larger turbine blades and power output. However, a larger turbine blade coupled with a relatively high rotational speed can introduce rotor instability including flutter. Therefore, ways to control rotor instability are needed. Conventional ways to control this instability exist but are limited to only specific rotor and blade configurations and cannot be applied in every circumstance or may be cumbersome. For example, conventional techniques use spacing between airfoils or inclusion of cavities within the airfoils as ways to control the instability.

### BRIEF DESCRIPTION OF THE DRAWINGS

The foregoing and other features and advantages will be apparent from the following, more particular, description of various exemplary embodiments, as illustrated in the accompanying drawings, wherein like reference numbers generally indicate identical, functionally similar, and/or structurally similar elements.
FIG. 1 is a schematic cross-sectional diagram of a turbine engine, according to an embodiment of the present disclosure.
FIG. 2 is a schematic diagram of a front view a rotor blade system having a rotor and a plurality of blades mounted thereon and positioned relative to a casing, according to an embodiment of the present disclosure.
FIGS. 3A through 3D are schematic representations of a tip of a blade, according to embodiments of the present disclosure.
FIG. 4A is a schematic diagram of a front view of a rotor blade system using one or more "cutter blades,", according to another embodiment of the present disclosure.
FIG. 4B is a schematic diagram of a tip of a blade having deposited thereon a material, according to an embodiment of the present disclosure.
FIG. 4C is a top view of the tip of the blade having deposited thereon the material, according to an embodiment of the present disclosure.
FIGS. 5A through 5C show examples of patterns of blades with different heights or radii, according to embodiments of the present disclosure.

### DETAILED DESCRIPTION

Additional features, advantages, and embodiments of the present disclosure are set forth or apparent from consideration of the following detailed description, drawings, and claims. Moreover, it is to be understood that both the foregoing summary of the present disclosure and the following detailed description are exemplary and intended to provide further explanation without limiting the scope of the disclosure as claimed.

Various embodiments of the present disclosure are discussed in detail below. While specific embodiments are discussed, this is done for illustration purposes only. A person skilled in the relevant art will recognize that other components and configurations may be used without departing from the spirit and scope of the present disclosure.

In the following specification and the claims, reference may be made to a number of "optional" or "optionally" elements meaning that the subsequently described event or circumstance may or may not occur, and that the description includes instances in which the event occurs and instances in which the event does not.

Approximating language, as used herein throughout the specification and claims, may be applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "axial" and "axially" refer to directions and orientations that extend substantially parallel to a centerline of the turbine engine or the combustor. Moreover, the terms "radial" and "radially" refer to directions and orientations that extend substantially perpendicular to the centerline of the turbine engine or the fuel-air mixer assembly. In addition, as used herein, the terms "circumferential" and "circumferentially" refer to directions and orientations that extend arcuately about the centerline of the turbine engine or the fuel-air mixer assembly.

Embodiments of the present disclosure seek to provide a way to intentionally mistune the blades so as to passively control flutter. Embodiments of the present disclosure seek to optimally tune tip gaps for flutter mitigation. For example, unshrouded blade rows with non-uniform blade heights can be used to break up a frequency content of a tip leakage vortex to modify natural frequencies of the blades and mode shapes. In an embodiment, the blades can have the same design and can be machined at different heights. In another embodiment, the blades can be redesigned for different tip loadings. Some of the blades can have different material/properties (cutter blades), which can also make them taller. The number and pattern of taller/shorter blades can be varied to allow for frequency tuning flexibility. Flutter is the self-excited vibration of blades due to the interaction of structural-dynamic and aerodynamic forces. Flutter can lead to high-cycle fatigue (HCF) in the blade or even blade loss. Phase differences between the blades when the blades are vibrating can generate flutter. For example, if the blades are identical, the aeroelastic modes (coupled structural and aerodynamic system) are patterns of blade vibration with a constant phase angle between adjacent blades. Each aeroelastic mode has a different inter-blade phase angle. The inter-blade phase angle affects the phase between the local unsteady fluid flow through the blades and local blade motion which in turn affects the unsteady aerodynamic work done on the blades. Adverse phase angles can lead to positive work being performed on the blades which results in flutter. Flutter normally occurs at a blade natural frequency and can produce sustained blade vibration.

Therefore, by tuning or selecting a radius of the blade, the frequency content of the tip leakage vortex can be controlled. This enables optimal use of "cutter blades," which can be provided with an additional layer of hard coating not only to increase the radial length of the blades, but also to make the blades stronger in a rub or contact event against the casing or the abradable layer.

In an embodiment, mistuning can be achieved by having different tip clearances, and consequently different tip vortices. This has the effect of disrupting/redistributing the frequency content of the tip leakage vortex to modify natural frequencies of the plurality of blades and mode shapes. The local reduction or increase of the tip radius can be uniform from leading edge to trailing edge or can be contoured.

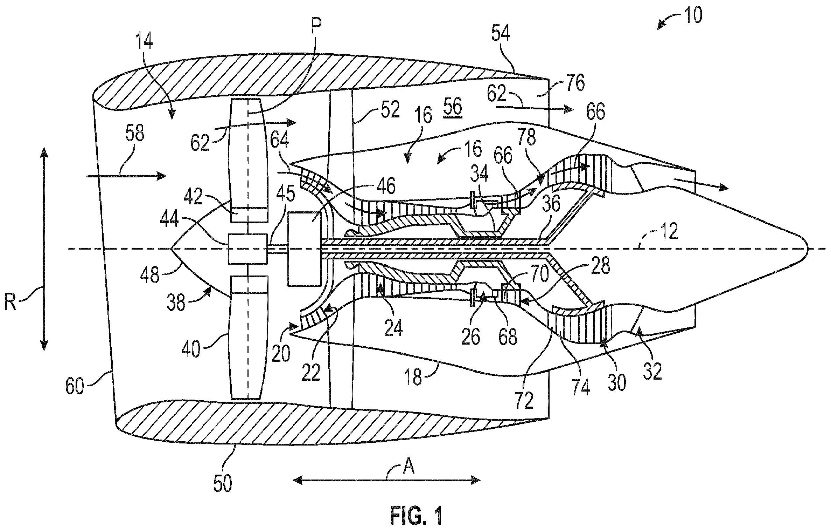

FIG. 1 is a schematic cross-sectional diagram of a turbine engine 10, according to an embodiment of the present disclosure. As shown in FIG. 1, the turbine engine 10 defines an axial direction A (extending parallel to a longitudinal centerline 12 provided for reference) and a radial direction R that is normal to the axial direction A. In general, the turbine engine 10 includes a fan section 14 and a core turbine engine 16 disposed downstream from the fan section 14.

The core turbine engine 16 depicted generally includes an outer casing 18 that is substantially tubular and defines an annular inlet 20. As schematically shown in FIG. 1, the outer casing 18 encases, in serial flow relationship, a compressor section including a booster or low pressure (LP) compressor 22 followed downstream by a high pressure (HP) compressor 24, a combustion section 26, a turbine section including a high pressure (HP) turbine 28 followed downstream by a low pressure (LP) turbine 30, and a jet exhaust nozzle section 32. A high pressure (HP) shaft or spool 34 drivingly connects the HP turbine 28 to the HP compressor 24 to rotate the HP turbine 28 and the HP compressor in unison. A low pressure (LP) shaft 36 drivingly connects the LP turbine 30 to the LP compressor 22 to rotate the LP turbine 30 and the LP compressor 22 in unison. The compressor section, the combustion section 26, the turbine section, and the jet exhaust nozzle section 32 together define a core air flowpath.

For the embodiment depicted in FIG. 1, the fan section 14 includes a fan 38 (e.g., a variable pitch fan) having a plurality of fan blades 40 coupled to a disk 42 in a spaced apart manner. As depicted in FIG. 1, the fan blades 40 extend outwardly from the disk 42 generally along the radial direction R. Each fan blade 40 is rotatable relative to the disk 42 about a pitch axis P by virtue of the fan blades 40 being operatively coupled to an actuation member 44 configured to collectively vary the pitch of the fan blades 40 in unison. The fan blades 40, the disk 42, and the actuation member 44 are together rotatable about the longitudinal centerline 12 via a fan shaft 45 that is powered by the LP shaft 36 across a power gearbox 46. The power gearbox 46 includes a plurality of gears for adjusting the rotational speed of the fan shaft 45 and, thus, the fan 38 relative to the LP shaft 36 to a more efficient rotational fan speed.

Referring still to the exemplary embodiment of FIG. 1, the disk 42 is covered by a rotatable front hub 48 aerodynamically contoured to promote an airflow through the plurality of fan blades 40. In addition, the fan section 14 includes an annular fan casing or a nacelle 50 that circumferentially surrounds the fan 38 and/or at least a portion of the core turbine engine 16. The nacelle 50 is supported relative to the core turbine engine 16 by a plurality of circumferentially spaced outlet guide vanes 52. Moreover, a downstream section 54 of the nacelle 50 extends over an outer portion of the core turbine engine 16 to define a bypass airflow passage 56 therebetween.

During operation of the turbine engine 10, a volume of air 58 enters the turbine engine 10 through an inlet 60 of the nacelle 50 and/or fan section 14. As the volume of air 58 passes across the fan blades 40, a first portion of the air 58 as indicated by arrow 62 is directed or routed into the bypass airflow passage 56, and a second portion of the air 58 as indicated by arrow 64 is directed or routed into the upstream section of the core air flowpath, or, more specifically, into the annular inlet 20 of the LP compressor 22. The ratio between the first portion of air 62 and the second portion of air 64 is commonly known as a bypass ratio. The pressure of the second portion of air 64 is then increased as it is routed through the HP compressor 24 and into the combustion section 26, where the highly pressurized air is mixed with fuel and burned to provide combustion gases 66.

The combustion gases 66 are routed into the HP turbine 28 and expanded through the HP turbine 28 where a portion of thermal and/or kinetic energy from the combustion gases 66 is extracted via sequential stages of HP turbine stator vanes 68 that are coupled to the outer casing 18 and the HP turbine rotor blades 70 that are coupled to the HP shaft or spool 34, thus causing the HP shaft or spool 34 to rotate, thereby supporting operation of the HP compressor 24. The combustion gases 66 are then routed into the LP turbine 30 and expanded through the LP turbine 30. Here, a second portion of thermal and kinetic energy is extracted from the combustion gases 66 via sequential stages of the LP turbine stator vanes 72 that are coupled to the outer casing 18 and the LP turbine rotor blades 74 that are coupled to the LP shaft 36, thus, causing the LP shaft 36 to rotate. This thereby supports operation of the LP compressor 22 and rotation of the fan 38 via the power gearbox 46.

The combustion gases 66 are subsequently routed through the jet exhaust nozzle section 32 of the core turbine engine 16 to provide propulsive thrust. Simultaneously, the pressure of the first portion of air 62 is substantially increased as the first portion of air 62 is routed through the bypass airflow passage 56 before being exhausted from a fan nozzle exhaust section 76 of the turbine engine 10, also providing propulsive thrust. The HP turbine 28, the LP turbine 30, and the jet exhaust nozzle section 32 at least partially define a hot gas path 78 for routing the combustion gases 66 through the core turbine engine 16.

The turbine engine 10 depicted in FIG. 1 is by way of example only. In other exemplary embodiments, the turbine engine 10 may have any other suitable configuration. For example, in other exemplary embodiments, the fan 38 may be configured in any other suitable manner (e.g., as a fixed pitch fan) and further may be supported using any other suitable fan frame configuration. Moreover, it should be appreciated that, in other exemplary embodiments, any other suitable number or configuration of compressors, turbines, shafts, or a combination thereof may be provided. In still other exemplary embodiments, aspects of the present disclosure may be incorporated into any other suitable gas turbine engine.

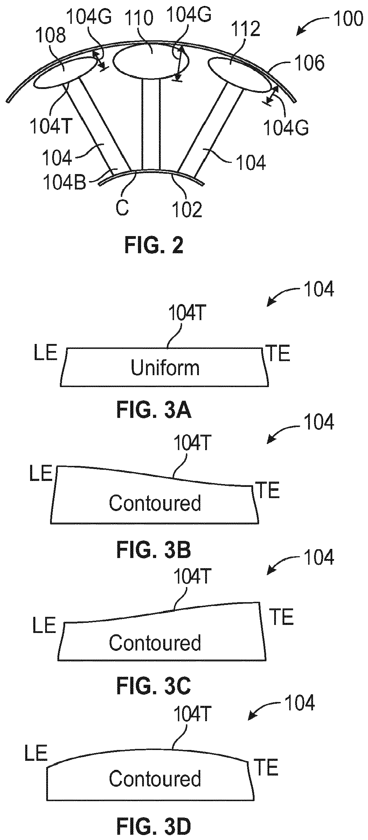

FIG. 2 is a schematic diagram of a front view a rotor blade system 100 having a rotor 102 and a plurality of blades 104 mounted thereon and positioned relative to a casing 106, according to an embodiment of the present disclosure. The rotor blade system 100 has a plurality of blades 104 mounted at a base 104B to the rotor 102. The plurality of blades 104 are positioned between the rotor 102 and the casing 106. In an embodiment, as illustrated in FIG. 2, the blades 104 can be equally spaced circumferentially around the circumference C of rotor 102. However, in another embodiment, the blades 104 may also be unequally spaced circumferentially around the circumference C of the rotor 102. A tip 104T of each blade 104 is positioned at a distance relative to the casing 106. The blades 104 rotate with the rotation of the rotor 102. The tip 104T of each blade rotates relative to the casing 106 and creates a fluid vortex 108, 110, 112 at the tip of 104T of the blade 104. Each blade 104 can create a different fluid vortex 108, 110, and 112, depending on the radial length or apparent radius (from a base 104B to the tip 104T) of the respective blade 104. Therefore, by providing a non-uniform or unequal blade radial lengths or heights a frequency content of a tip leakage vortex can be broken. This provides the ability to intentionally mistune the blades 104 so as to passively control flutter. In an embodiment, gaps 104G between tips 104T of the blades 104 and the casing 106 can be selected so that the frequency of the blades 104 can be mistuned so as to control and to mitigate flutter. The term "frequency" is used herein to mean natural frequency, which is the frequency at which the blade or system vibrates without driving or damping forces. For example, in an embodiment, the gap 104G between tips 104T of selected one or more blades 104 and the casing 106 can be increased by removing material from the selected one or more blades 104, thus, decreasing the height or radial length of the selected blades 104 while the gap 104G between tips 104T of other blades 104 can remain unmodified. In general, one or more of the plurality of blades 104 is provided with a radial length different from a remaining one or more of the plurality of blades 104 so as to vary the gap 104G between the tip 104T of the one or more of the plurality of blades 104 and the casing 106 to break up a frequency content of a leakage vortex at the tip 104T to reduce or substantially eliminate flutter.

In an embodiment, the blades 104 can have the same design and can be machined at different heights or radial lengths. In another embodiment, the blades 104 can be redesigned for different tip shapes.

FIGS. 3A through 3D are schematic representations of a tip 104T of a blade 104, according to embodiments of the present disclosure. As shown in FIGS. 3A through 3D, the tip 104T of a blade 104 can have a different profile from the leading edge LE to the trailing edge TE. FIG. 3A illustrates a uniform or equal height or radial length at the leading edge LE and at the trailing edge TE of a tip 104T of a blade 104. Mistuning is achieved by having different tip clearances, and consequently different tip vortices. This has the effect of disrupting or redistributing the frequency content of the tip leakage vortex. The reduction of the tip 104T radius can be uniform from leading edge LE to trailing edge TE, as shown in FIG. 3A, or can be contoured to have a selected profile as shown in FIGS. 3B through 3D. The reduction of the radius, radial length, or height of a blade 104 can be uniform from leading edge LE to trailing edge TE or can be contoured. In an embodiment, the tip 104T is provided with a contoured profile such that a radial length of the blade 104 varies from the leading edge LE of the blade to the trailing edge TE of the blade. In an embodiment, mistuning can be achieved by having different gaps 104G (see FIG. 2). In an embodiment, the selection of a different gap 104G can also be made in combination with a selected contoured profile of the tip 104T of selected blades 104. This has the effect of disrupting/redistributing the frequency content leakage vortex at the tip 104T of the blade 104.

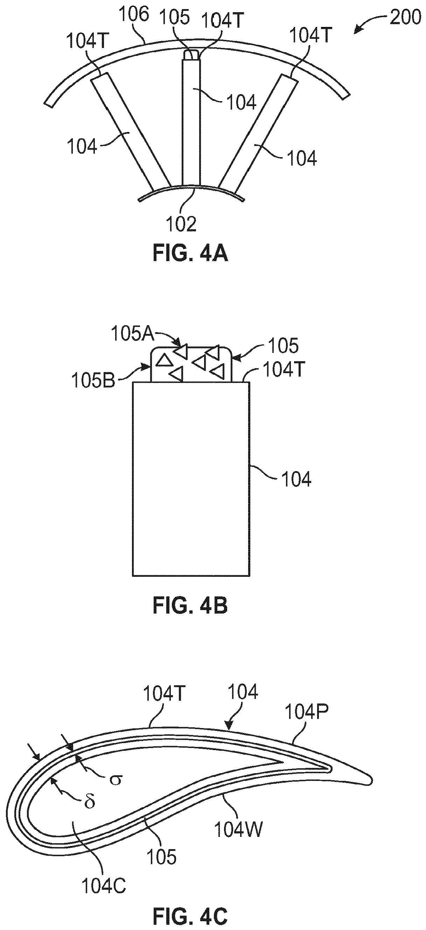

FIG. 4A is a schematic diagram of a front view of a rotor blade system 200 using one or more "cutter blades" 104, according to another embodiment of the present disclosure. As shown in FIG. 4A, the rotor blade system 200 includes a rotor 102 and a plurality of blades 104 coupled to the rotor 102. One or more blades 104 ("cutter blades") of the plurality of blades 104 can have a material 105 deposited on the tip 104T of the blades 104. In an embodiment, material 105 can be provided or deposited on the tip 104T of the one or more blade 104 to increase the radial length or height or radius of the one or more blades 104 while other blades in the plurality of blades 104 can remain unaltered, i.e., with unchanged radial length, height, or radius. The increasing of the height, radial length, or radius of the one or more blades 104 can provide tuning of the frequency content of the leakage vortex at the tip 104T of the one or more blades 104 and, thus, controlling the flutter. In addition to the ability of tuning the frequency content of the leakage vortex with the material at the tip 104T of the one or more blades 104, by providing material 105 at the tip 104T of the one or more blades 104, the one or more blades 104 can be made stronger in case of a rub or contact event against the casing 106. In this embodiment, the one or more blades 104 (cutter blades) can be made taller than other blades, so that they rub on the casing 106 first in the event of possible incursion.

FIG. 4B is a schematic diagram of a tip 104T of a blade 104 having material 105 deposited thereon, according to an embodiment of the present disclosure. The material 105 can be a hard coating layer that can enhance the strength of the one or more blades 104. In an embodiment, the material 105 can be made of hard particles 105A embedded in a metal matrix 105B. In an embodiment, the hard particles 105A can be, for example, cubic boron nitride (cBN). In an embodiment, the metal matrix 105B can be, for example, a CoNiCrAlY matrix. In an embodiment, the material 105 at the tip 104T can also protect the blade 104 in case of a rub with the casing 106. In an embodiment, the casing 106 can be provided with a ceramic coating layer, such as 8YSZ, 20YSZ (TBC), or YbYDS (EBC) layer, depending on operating temperature and the substrate material of the casing 106. The ceramic coating layer can be provided on the pressure side, i.e., the side facing the tip 104T of the blades 104, or on the suction side.

FIG. 4C is a top view of the tip 104T of the blade 104 having the material 105 deposited thereon, according to an embodiment of the present disclosure. As shown in FIG. 4C, in an embodiment, the blade 104 has a tear drop shape with a hollow core 104C to reduce weight. The material 105 can be, for example, deposited around a periphery 104P of the tip 104T of the blade 104. A thickness σ of the deposited material 105 can be smaller than or equal to a thickness δ of a wall 104W of the blade 104. In an embodiment, the deposited material 105 can also have different patterns (not shown in FIG. 4C), for example discontinuous in the axial direction.

One benefit of the present configuration is that tall blades can be provided with material 105 (e.g., high-durability tip material) for cutting into abradable casing material. Another benefit of using cutter blades is an enhanced performance because providing blades with material 105 at the tip 104T of the one or more blades 104 provides the ability to have a tighter gap for all the other remaining blades 104. An additional benefit is the ability of in-situ tuning by depositing material 105 to selected one or more blades 104 instead of having to redesign blades 104 for mistuning. In general, adding mass by adding the material 105 at the tip 104T of the one or more blades 104 provides flutter control.

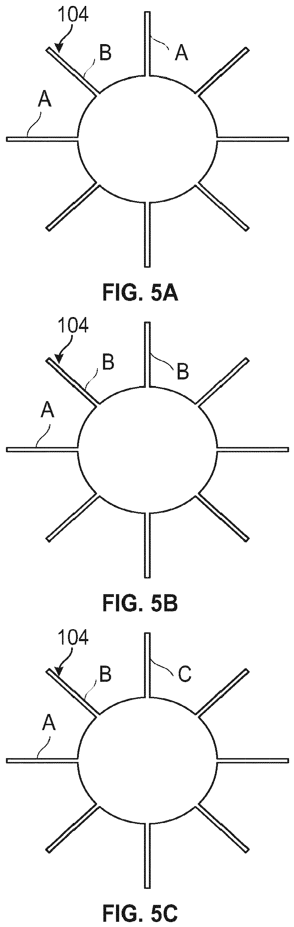

FIGS. 5A through 5C show examples of patterns of blades 104 with different heights or radii, according to embodiments of the present disclosure. In an embodiment, a number and pattern of taller/shorter blades can be varied to allow for frequency tuning flexibility. For example, FIG. 5A shows an "ABA" pattern with a height B of blade 104 being shorter than a height A of another blade 104 or vice-versa. In this example, one blade 104 of a different height B is disposed between two other blades 104 of the same height A. FIG. 5B shows an "ABB" with a height B of a blade 104 being shorter than a height A of another blade 104 or vice-versa. In this example, one blade 104 of a different height A is disposed between two consecutives blades 104 of the same height B. FIG. 5C shows an "ABC" with a height B of blade 104 being different from a height A of another blade 104 and a height C of another blade 104. In this example, this pattern uses consecutive blades 104 with different heights A, B, and C.

The rotor blade system 100, 200 described in the above paragraphs can be used in any system of turbine engine 10. For example, the rotor blade system 100, 200 described herein can be used in the LPC, HPC, LPT and/or HPT of the turbine engine 10, or, in general, in any system where blades and rotors are used. The rotor blade system 100, 200 is equally applicable to industrial gas turbines (IGTs) or power generation turbines. The present rotor blade system is not limited only to turbine engines, but can be used in any airfoil system where the goal is to reduce flutter.

As can be appreciated from the discussion above, a rotor blade system includes a rotor, a casing radially spaced apart from the rotor, and a plurality of blades coupled to the rotor and positioned between the rotor and the casing. The one or more of the plurality of blades have a radial length different from a remaining one or more of the plurality of blades so as to vary a tip gap between a tip of the one or more of the plurality of blades and the casing to break up a frequency content of a leakage vortex at the tip to reduce or substantially to eliminate flutter.

The rotor blade system according to the above clause, wherein the plurality of blades are equally spaced circumferentially around a circumference C of the rotor.

The rotor blade system according to any of the above clauses, wherein the tip gap between the tip of the one or more of the plurality of blades is selected so that a frequency of the plurality of blades is mistuned.

The rotor blade system according to any of the above clauses, wherein the radial length of the one or more of the plurality of blades is less than the remaining one or more of the plurality of blades.

The rotor blade system according to any of the above clauses, wherein the plurality of the blades are machined at different radial lengths.

The rotor blade system according to any of the above clauses, wherein the tip of the one or more of the plurality of blades is provided with a contoured profile, a radial length of the one or more of the plurality of blades varying from a leading edge of the one or more of the plurality of blades to a trailing edge of the one or more of the plurality of blades.

The rotor blade system according to any of the above clauses, wherein the one or more of the plurality of blades is provided with a material deposited on the tip of the one or more of the plurality of blades.

The rotor blade system according to any of the above clauses, wherein the material deposited on the tip of the one or more of the plurality of blades increases a radial length of the one or more of the plurality of blades while the radial length of the remaining one or more of the plurality of blades is not changed.

The rotor blade system according to any of the above clauses, wherein the material is selected to strengthen the one of more of the plurality of blades in an event of a rub of the tip of the one or more of the plurality of blades against the casing.

The rotor blade system according to any of the above clauses, wherein the material comprises hard particles embedded in a metal matrix.

The rotor blade system according to any of the above clauses, wherein the hard particles comprise cubic Boron Nitride (cBN).

The rotor blade system according to any of the above clauses, wherein the metal matrix comprises a CoNiCrAlY matrix.

The rotor blade system according to any of the above clauses, wherein the casing is coated with a ceramic coating layer to protect the casing from a potential rub of the one or more of the plurality of blades, the ceramic coating layer comprising a material selected from the group consisting of 8YSZ, 20YSZ, and YbYDS.

The rotor blade system according to any of the above clauses, wherein the one or more of the plurality of blades has a hollow core to reduce weight of the one or more of the plurality of blades, and the material is deposited on a periphery of the tip of the one or more of the plurality of blades.

The rotor blade system according to any of the above clauses, wherein a thickness of the deposited material is less than or equal to a thickness of a wall of the one or more of the plurality of blades.

The rotor blade system according to any of the above clauses, wherein the one or more of the plurality of blades has a first radial length and the remaining one or more of the plurality of blades has a second radial length different from the first radial length, and the one or more of the plurality of blades having the first radial length is disposed between two of the remaining plurality of blades having the second radial length, or the one or more of the plurality of blades having the first radial length is disposed between two consecutive blades of the remaining plurality of blades having the second radial length.

Another aspect of the present disclosure is to provide a turbine engine including a rotor blade system having a rotor, a casing radially spaced apart from the rotor, and a plurality of blades coupled to the rotor and positioned between the rotor and the casing, the one or more of the plurality of blades having a radial length different from a remaining one or more of the plurality of blades so as to vary a tip gap between a tip of the one or more of the plurality of blades and the casing to break up a frequency content of a leakage vortex at the tip to reduce or substantially to eliminate flutter.

The turbine engine according to the above clause, wherein the tip of the one or more of the plurality of blades is provided with a contoured profile, a radial length of the one or more of the plurality of blades varying from a leading edge of the one or more of the plurality of blades to a trailing edge of the one or more of the plurality of blades.

The turbine engine according to any of the above clauses, wherein the one or more of the plurality of blades is provided with a material deposited on the tip of the one or more of the plurality of blades.

The turbine engine according to any of the above clauses, wherein the material deposited on the tip of the one or more of the plurality of blades increases a radial length of the one or more of the plurality of blades while the radial length of the remaining one or more of the plurality of blades is not changed.

Although the foregoing description is directed to the preferred embodiments of the present disclosure, it is noted that other variations and modifications will be apparent to those skilled in the art, and may be made without departing from the spirit or scope of the disclosure. Moreover, features described in connection with one embodiment of the present disclosure may be used in conjunction with other embodiments, even if not explicitly stated above.

## Claims

1. A rotor blade system (100, 200) comprising:
a rotor (102);
a casing (106) radially spaced apart from the rotor (102); and
a plurality of blades (104) coupled to the rotor (102) and positioned between the rotor (102) and the casing (106), one or more of the plurality of blades (104) having a radial length different from a remaining one or more of the plurality of blades (104) so as to vary a tip gap (104G) between a tip (104T) of the one or more of the plurality of blades (104) and the casing (106) to break up a frequency content of a leakage vortex at the tip (104T) to reduce or substantially eliminate flutter.

2. The rotor blade system (100, 200) according to claim 1, wherein the plurality of blades (104) are equally spaced circumferentially around a circumference C of the rotor (102).

3. The rotor blade system (100, 200) according to any preceding claim, wherein the tip gap (104G) between the tip (104T) of the one or more of the plurality of blades (104) is selected so that a frequency of the plurality of blades (104) is mistuned.

4. The rotor blade system (100, 200) according to any preceding claim, wherein the radial length of the one or more of the plurality of blades (104) is less than the remaining one or more of the plurality of blades (104) or the plurality of the blades (104) are machined at different radial lengths.

5. The rotor blade system (100, 200) according to any preceding claim, wherein the tip (104T) of the one or more of the plurality of blades (104) is provided with a contoured profile, a radial length of the one or more of the plurality of blades (104) varying from a leading edge of the one or more of the plurality of blades (104) to a trailing edge of the one or more of the plurality of blades (104).

6. The rotor blade system (100, 200) according to any preceding claim, wherein the one or more of the plurality of blades (104) has a first radial length and the remaining one or more of the plurality of blades (104) has a second radial length different from the first radial length, and the one or more of the plurality of blades (104) having the first radial length are disposed between two of the remaining plurality of blades having the second radial length, or the one or more of the plurality of blades (104) having the first radial length are disposed between two consecutive blades of the remaining plurality of blades (104) having the second radial length.

7. The rotor blade system (100, 200) according to any preceding claim, wherein the one or more of the plurality of blades is provided with a material (105) deposited on the tip (104T) of the one or more of the plurality of blades (104).

8. The rotor blade system (100, 200) according to claim 7, wherein the material (105) deposited on the tip (104T) of the one or more of the plurality of blades (104) increases a radial length of the one or more of the plurality of blades (104) while the radial length of the remaining one or more of the plurality of blades (104) is not changed, and optionally, the material (105) is selected to strengthen the one of more of the plurality of blades (104) in an event of a rub of the tip (104T) of the one or more of the plurality of blades (104) against the casing (106).

9. The rotor blade system (100, 200) according to claim 7 or 8, wherein the material (105) comprises hard particles (105A) embedded in a metal matrix (105B).

10. The rotor blade system (100, 200) according to claim 9, wherein the hard particles (105A) comprise cubic boron nitride (cBN).

11. The rotor blade system (100, 200) according to claim 9 or 10, wherein the metal matrix (105B) comprises a CoNiCrAlY matrix.

12. The rotor blade system (100, 200) according to any of claims 9 to 11, wherein the casing (106) is coated with a ceramic coating layer to protect the casing (106) from a potential rub of the one or more of the plurality of blades (104), the ceramic coating layer comprising a material selected from the group consisting of 8YSZ, 20YSZ, and YbYDS.

13. The rotor blade system (100, 200) according to any of claims 7 to 12, wherein the one or more of the plurality of blades (104) has a hollow core (104C) to reduce weight of the one or more of the plurality of blades (104) and the material (105) is deposited on a periphery (104P) of the tip (104T) of the one or more of the plurality of blades (104).

14. The rotor blade system (100, 200) according to claim 13, wherein a thickness of the deposited material (105) is less than or equal to a thickness of a wall (104W) of the one or more of the plurality of blades (104).

15. A turbine engine (10) comprising the rotor blade system (100, 200) of any of claims 1 through 14.
